# EUROPÄISCHE PATENTSCHRIFT

(11) **EP 0 415 135 B1**
(45) Veröffentlichungstag und Bekanntmachung des Hinweises auf die Patenterteilung: **25.02.1998**
(21) Anmeldenummer: 90115120.9
(22) Anmeldetag: 07.08.1990
(51) Int. Cl.: B22C 9/08, F16D 65/12

(54) **Verfahren zum Herstellen von Bremsscheiben**
Method for manufacturing brake discs
Procédé de fabrication de disques de frein

(30) Priorität: 25.08.1989 DE 3928111
(43) Veröffentlichungstag der Anmeldung: 06.03.1991
(73) Patentinhaber: Schwäbische Hüttenwerke Gesellschaft mit beschränkter Haftung, D-73414 Aalen (DE)
(72) Erfinder: Metzler, Horst, D-7200 Tuttlingen (DE); Schwarz, Günther, D-7200 Tuttlingen (DE)
(74) Vertreter: Lorenz, Werner, Dipl.-Ing.

(56) Entgegenhaltungen:
- DE-A- 2 358 140
- DE-A- 3 709 062
- FR-A- 1 561 267
- FR-A- 2 355 588
- PATENT ABSTRACTS OF JAPAN, Band 13, Nr. 360 (M-858)[3708], 11. August 1989; & JP-A-1 120 445 (AKEBONO BRAKE RES. & DEV. CENTER LTD) 12-05-1989
- MACHINERY AND PRODUCTION ENGINEERING, Band 653, Nr. 112, 27. März 1968, Seiten 615-621; H.K. BARTON: "Gating multi-cavity dies"
- FOUNDRY TRADE JOURNAL, 28. Mai 1953, Seiten 601-609; E. DAYBELL et al.: "Runners and risers"

## Beschreibung

Die Erfindung betrifft ein Verfahren zum gleichzeitigen Herstellen von mehreren Bremsscheiben, insbesondere belüfteten Bremsscheiben, durch Gießen in einer gemeinsamen Sandform.

Die FR-PS 2 355 588 beschreibt ein Gießsystem für Bremsscheiben, bei dem sich der Einlauftrichter seitlich der zu gießenden Bremsscheiben befindet. In der Mitte der Bremsscheiben ist ein Druckausgleichskanal angeordnet, der ebenfalls als Eingußtrichter verwendet werden kann.

Nachteilig bei der dort vorgeschlagenen Lösung ist, daß durch das Eingießsystem kein gleichmäßiges Eingießen erreichbar ist. Dieses Verfahren ist somit nicht für hochwertige Bremsscheiben, insbesondere für PKW-Bremsscheiben geeignet, wo sehr hohe Anforderungen an die Gußqualität der Bremsscheiben gestellt werden.

Bei einem weiteren bekannten Herstellungsverfahren werden Bremsscheiben in einer Anlage vertikal, d.h. aufrecht stehend, steigend gegossen. Die Anlage ist sehr schnell und damit leistungsfähig. Es hat sich jedoch herausgestellt, daß bei diesem Gießverfahren große Gefüge- und Härteunterschiede in den Bremsscheiben entstehen, die zu erheblichen Qualitätsmängeln bei Bremsscheiben führen.

Gleiches gilt für eine ebenfalls bekannte Herstellung von Bremsscheiben im horizontalen Gießverfahren. Hierzu werden im allgemeinen kastenlose Anlagen verwendet, wobei der Sand durch einen Rahmen gepreßt und anschließend der Rahmen wieder ausgestoßen wird. Vor dem Gießen werden sogenannte Belasteisen auf die Form gelegt, weshalb einseitig von einer Seite aus über Speiser angeschnitten und gegossen werden muß. Je nach Typ der Bremsscheiben gibt es mehrere Anschnitte mit der Gefahr von Lunkerneigungen oder man verwendet einen Ringlauf.

Eines der Probleme bei diesem Verfahren besteht darin, daß das Flüssigeisen punktuell in die Scheibenform läuft. Daraus entstehen lokale Aufheizungen an den Stellen im Bereich des Einlaufes und eine entsprechend langsamere und ungleiche Abkühlung. Dies bedeutet, daß die Bremsscheibe einseitig thermisch belastet wird, wobei sich durch die unterschiedlichen Abkühlgeschwindigkeiten erhebliche Härteunterschiede des Materiales einstellen. Von Nachteil ist weiterhin, daß sich bei belüfteten Bremsscheiben, d.h. bei Bremsscheiben, die mit Kühlkanälen versehen sind, Unebenheiten in den Kühlkanälen einstellen. Daraus resultiert eine Unwucht der Scheibe.

Durch die entstehenden Härteunterschiede leidet auch die Parallelität der beiden Scheibenoberflächen, d.h. der Reibringe. In der Praxis hat man Härteunterschiede von bis zu 20 Brinell Härtepunkten festgestellt. Diese Härteunterschiede führen beim Bearbeiten der Bremsscheibe, insbesondere beim Drehen zu Drehfehlern. So entstehen z.B. beim Drehen mit einem Hydraulik-Stahlhalter, der stets mit einem gleichen Anpressdruck arbeitet, an den weichen Stellen Dellen in der Oberfläche.

Der vorliegenden Erfindung liegt die Aufgabe zugrunde, ein Verfahren zum Herstellen von Bremsscheiben zu schaffen, durch das Bremsscheiben mit höherer Qualität, insbesondere mit einer gleichmäßigeren Härteverteilung und höheren Genauigkeit geschaffen werden kann.

Erfindungsgemäß wird diese Aufgabe durch die in Anspruch 1 genannten Merkmale gelöst.

Erfindungsgemäß wird nunmehr bei einem Gießen von mehreren Scheiben in einem Formkasten jede Scheibe einzeln für sich zentral über den in den Oberkasten direkt eingeformten Oberlauf gegossen. Hierzu eignet sich z.B. die Nabe bzw. die zentrale Bohrung der Scheibe, von der aus gleichmäßig eingegossen werden kann, womit sich das einfließende Eisen gleichmäßig verteilt. Zu diesem Zwecke ist es lediglich erforderlich, in der Zentrumsbohrung der Bremsscheibe Angußrippen vorzusehen, von denen aus das flüssige Eisen z.B. sternförmig zur Nabe der zu gießenden Bremsscheibe gleichmäßig weitergeleitet wird.

In überraschender Weise hat man festgestellt, daß durch die gleichmäßige Beaufschlagung mit Flüssigeisen die Härtedifferenz des Materiales bei maximal ca. 4 Brinell Härtepunkten liegt. Auch die Belastung des Belüftungskernes für die Bremsscheiben bzw. die Kühlkanäle, die bisher punktuell war und damit zu Kernrissen geführt hat, ist absolut gleichmäßig. Dies wirkt sich sehr positiv auf die Ebenheit des Kühlkanales aus, womit im Gegensatz zum Stand der Technik nahezu kein Taumelschlag der Bremsscheiben auftritt.

Von Vorteil ist weiterhin, daß bezüglich der Parallelität der beiden Oberflächen der Bremsscheiben, d.h. der Reibringe, des Planschlages und der Unwucht ohne Schwierigkeiten enge Toleranzen eingehalten werden können. So können z.B. Parallelitätstoleranzen der Reibringe von 0,0030 - 0,0050 mm eingehalten werden.

Selbstverständlich ist ein zentrales Gießen von Gußteilen aus anderen Gebieten bereits bekannt, aber für die Herstellung von Bremsscheiben hat man diese Methode, insbesondere wegen der hohen Stückzahlen, d.h. der Serienfertigung, nicht angewendet, sondern vielmehr mit kastenlosen Anlagen gearbeitet.

Die Erfinder haben jedoch in überraschender Weise festgestellt, daß bei Verwendung von Formkästen mit jeweils einem Oberkasten und einem Unterkasten, die gegebenenfalls zueinander verriegelbar sind, und durch ein Einformen des Oberlaufes direkt in den Oberkasten die damit erzielbaren Vorteile überwiegen.

In einer erfindungsgemäßen Ausbildung kann vorgesehen sein, daß die Bremsscheiben überwiegend, insbesondere die Nabe, in den Oberkasten eingeformt wird. Dabei können die Bremsscheiben im Oberkasten fallend gegossen werden.

Selbstverständlich ist jedoch auch eine umgekehrte Verfahrensweise im Rahmen der Erfindung möglich. So können die Bremsscheiben z.B. wenigstens annähernd überwiegend, insbesondere mit ihrer Nabe, in den Unterkasten eingeformt werden und man kann vom Unterteil aus steigend gießen.

Nachfolgend sind zwei Ausführungsbeispiele der Erfindung anhand der Zeichnung prinzipmäßig dargestellt.

Es zeigt:
- Fig. 1:: eine Draufsicht auf den Oberkasten des Formkastens;
- Fig. 2:: einen Vertikalschnitt durch den Formkasten mit einem fallenden Guß;
- Fig. 3:: einen Vertikalschnitt durch den Formkasten mit einem steigenden Guß.

Das Gießverfahren zum Herstellen von Bremsscheiben ist allgemein bekannt, weshalb nachfolgend nicht näher darauf eingegangen wird.

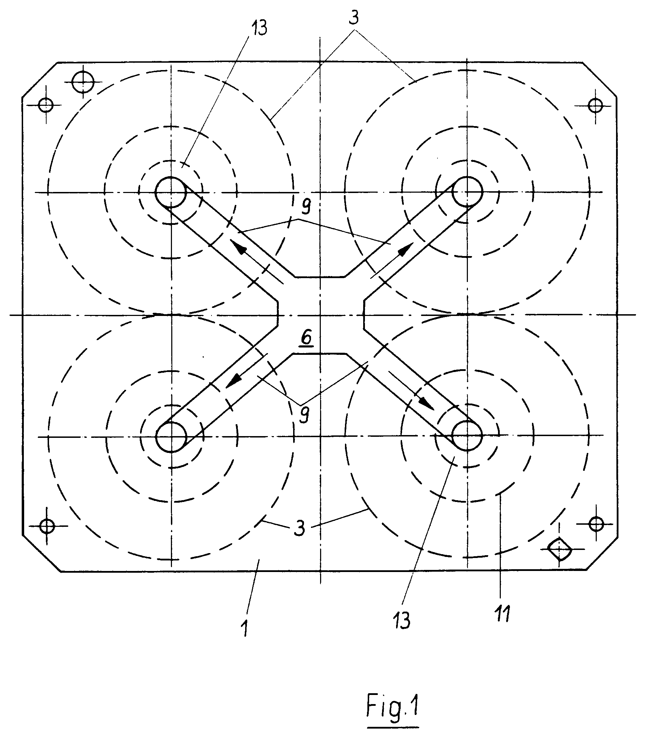

In einen Formkasten, der aus einem Oberkasten 1 und einem Unterkasten 2 besteht, welche zueinander verriegelbar sind, werden in die Sandform vier Formen 3 für belüftete Bremsscheiben eingeformt (siehe Figur 1). Für den oder die Kühlkanäle sind entsprechende Kerne 5 vorgesehen. Bei einer Herstellung von massiven Bremsscheiben entfallen die Kerne selbstverständlich.

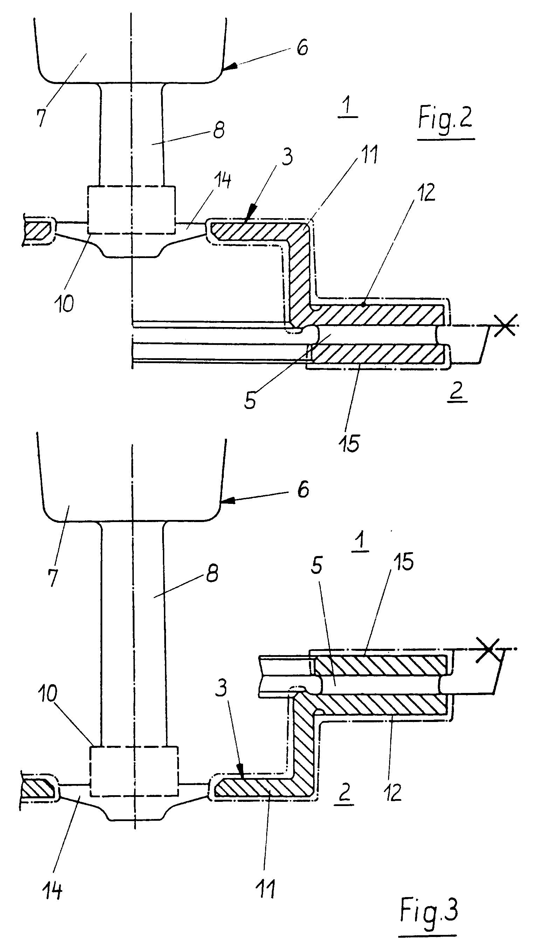

Der Formkasten ist normalerweise mit einer Vielstempelpresse ausgerüstet und über eine Pressplatte und einen Vibrator wird der Sand verdichtet, wobei ein Raum für einen Oberlauf 6 freigehalten wird. Der Oberlauf weist im allgemeinen einen größeren Einlauftrichter 7 auf und einen daran sich anschließenden Gußkanal 8, der sich bei einem Gießen von mehreren Bremsscheiben in einem Formkasten in eine entsprechende Zahl von Abzweigkanälen 9 aufteilt. Falls gewünscht, können am Ende der Abzweigkanäle 9 noch jeweils Gießfilter 10 vorgesehen sein (siehe gestrichelte Darstellung in den Figuren 2 und 3).

Wie aus den Figuren ersichtlich ist, münden die Abzweigkanäle 9 jeweils im zentralen Bereich einer Bremsscheibe, d.h. in dessen zentralen Bohrung 13, von wo aus sich das Flüssigeisen über sternförmige Angußrippen 14 gleichmäßig nach außen verteilen kann. Die Angußrippen 14 werden ebenso wie die übrigen Angußteile später von der Bremsscheibe in üblicher Weise abgetrennt.

Bei dem Ausführungsbeispiel nach der Figur 2 ist die zu gießende Bremsscheibe praktisch nahezu vollständig in den Oberkasten 1 eingeformt. Dies betrifft insbesondere die Nabe 11 der Bremsscheibe und einen Reibring 12. Die Trennstelle zwischen dem Oberkasten 1 und dem Unterkasten 2 ist durch die strichpunktierte Linie und ein x dargestellt. Wie ersichtlich wird die Bremsscheibe nach der Figur 2 fallend vom Oberkasten aus gegossen.

Die Figur 3 zeigt ein Herstellungsverfahren für eine Bremsscheibe, wobei die Bremsscheibenform spiegelbildlich zu der in der Figur 2 angeordneten liegt. Wie ersichtlich befindet sich in diesem Falle die Nabe 11 und ebenfalls ein Reibring 15 im Unterkasten 2. Der mit dem Oberlauf 6 verbundene Gußkanal ist in diesem Falle durch den Oberkasten 1 hindurchgeführt und mündet im Unterkasten 2 ebenfalls zentral in dem Bereich der Bohrung 13 der zu gießenden Bremsscheibe. Wie ersichtlich wird in diesem Falle von dem Unterkasten 2 aus steigend gegossen.

Einer der Hauptvorteile bei beiden Gießverfahren sind die geringen Härteunterschiede der nach diesen Verfahren hergestellten Bremsscheiben, worauf deren hohe Qualität beruht. So sind z.B. die Flächen der beiden Reibringe 12 und 15 sehr exakt parallel zueinander.

Eine mögliche Werkstoffzusammensetzung kann z.B. aus einem perlitischen Grundgefüge mit maximal 5% Ferritanteil und einer Zugfestigkeit von mind. 200 N/mm² mit folgender chemischer Zusammensetzung bestehen:

| | |
|---|---|
| Kohlenstoff | 3,62 - 3,68 % |
| Silizium | max. 2,10 % |
| Mangan | 0,70 - 0,85 % |
| Phosphor | weniger als 0,080 % |
| Schwefel | weniger als 0,095 % |
| Chrom | 0,18 - 0,25 % |
| Molybdän | 0,30 - 0,45 % |
| Kupfer | 0,30 - 0,45 % |
| Rest | Eisen |

Selbstverständlich kann das Formen der Bremsscheibe in dem erfindungsgemäßen Verfahren auch unter Verwendung sogenannter verlorener Formen erfolgen. Es handelt sich dabei um ein an sich bekanntes Verfahren, in welchem die Form nicht anhand eines Modells im Sand negativ ausgeformt wird, sondern positiv in Schaumstoffausführung vorliegt. Der Schaumstoff brennt dann bei Einfluß des flüssigen Eisens, das an seine Stelle tritt, weg.

## Patentansprüche

1. Verfahren zum gleichzeitigen Herstellen von mehreren Bremsscheiben, insbesondere belüfteten Bremsscheiben (3), durch Gießen in einer gemeinsamen Sandform, wobei Flüssigeisen über einen in einem Oberkasten (1) eingeformten Oberlauf (6) mit einem zentral innerhalb der zu gießenden Bremsscheiben (3) sich befindenden Einlauftrichter (7) eingebracht und strahlenförmig über ausschließlich in jeweils zentrale Bereiche der zu gießenden Bremsscheiben (3) mündende Abzweigkanäle (9) zu diesen Bereichen geführt wird, von wo aus das Flüssigeisen sternförmig nach außen verteilt wird.

2. Verfahren nach Anspruch 1,
**dadurch gekennzeichnet,** daß
die Bremsscheiben (3) überwiegend, insbesondere mit ihren Naben (11), in den Oberkasten (1) eingeformt werden.

3. Verfahren nach Anspruch 2,
**dadurch gekennzeichnet,** daß
die Bremsscheiben (3) im Oberkasten (1) fallend gegossen werden.

4. Verfahren nach Anspruch 1,
**dadurch gekennzeichnet,** daß
die Bremsscheiben (3) überwiegend, insbesondere mit ihren Haben (11), in den Unterkasten (2) eingeformt werden.

5. Verfahren nach Anspruch 4,
**dadurch gekennzeichnet,** daß
die Bremsscheiben (1) im Unterkasten (2) steigend gegossen werden.

## Claims

1. Method for the simultaneous manufacture of a plurality of brake discs, in particular ventilated brake discs (3), by casting in a common sand mould, in which molten iron is introduced by means of a top runner (6) moulded into a cope box (1) and having a feed hopper (7) situated centrally within the brake discs (3) to be cast, and is guided radially to respective central regions of the brake discs (3) to be cast by means of branch channels (9) opening exclusively into these regions, from where the molten iron is distributed radially outwards.

2. Method according to claim 1, characterised in that the brake discs (3) are moulded for the most part, in particular by means of their hubs (11), into the cope box (1).

3. Method according to claim 2, characterised in that the brake discs (3) are top-poured into the cope box (1).

4. Method according to claim 1, characterised in that the brake discs (3) are moulded for the most part, in particular by means of their hubs (11), into the drag box (2).

5. Method according to claim 4, characterised in that the brake discs (3) are poured into the drag box (2) from the bottom.

## Revendications

1. Procédé de fabrication simultanée de plusieurs disques de freinage, notamment de disques de freinage ventilés (3), dans lequel on déverse du fer en fusion par un conduit supérieur (6) ménagé dans un boîtier supérieur (1), ce conduit comportant un entonnoir d'entrée (7) disposé de façon centrale par rapport aux disques de freinage (3) à mouler, de façon dispersée à travers des canaux de dérivation (9) débouchant respectivement dans des zones centrales des disques de freinage (3) à mouler, d'où le fer en fusion est soumis à une distribution en étoile vers l'extérieur de ces zones centrales.

2. Procédé selon la revendication 1,
**caractérisé en ce que** les disques de freinage (3) sont essentiellement formés dans le boîtier supérieur (1), en particulier au niveau de leur nervure (11).

3. Procédé selon la revendication 2,
**caractérisé en ce que** les disques de freinage (3) sont coulés dans le boîtier supérieur (1) par chute de la matière en fusion.

4. Procédé selon la revendication 1,
**caractérisé en ce que** les disques de freinage (3) sont essentiellement formés dans le boîtier inférieur (2) en particulier au niveau de leur nervure (11).

5. Procédé selon la revendication 4,
**caractérisé en ce que** les disques de freinage (3) sont coulés dans le boîtier inférieur (2) par remontée de la matière en fusion.
